**Europäisches Patentamt**

**European Patent Office**

**Office européen des brevets**

(19)

(11) Veröffentlichungsnummer: **0 254 114 B1**

# EUROPÄISCHE PATENTSCHRIFT

(12)

(45) Veröffentlichungstag der Patentschrift:
26.09.90

(21) Anmeldenummer: 87109709.3

(22) Anmeldetag: 06.07.87

(51) Int. Cl.⁵: **B60H 1/32, B60H 1/24**

(54) Anordnung zur Kühlung von Fahrzeugteilen.

(30) Priorität: 17.07.86 DE 3624222

(43) Veröffentlichungstag der Anmeldung:
27.01.88 Patentblatt 88/4

(45) Bekanntmachung des Hinweises auf die Patenterteilung:
26.09.90 Patentblatt 90/39

(84) Benannte Vertragsstaaten:
BE DE ES FR GB IT NL SE

(56) Entgegenhaltungen:
DE-A- 2 634 528
DE-A- 3 721 616

PATENT ABSTRACTS OF JAPAN, Band 6,
Nr. 71 (M-126)[949], 6. Mai 1982; &
JP-A-57 11 105 (NIPPON JIDOSHA BUHIN SOGO
KENKYUSHO K.K.) 20-01-1982
PATENT ABSTRACTS OF JAPAN, Band 10,
Nr. 342 (M-536)[2398], 19. November 1986; &
JP-A-61 143 215 (SANYO ELECTRIC CO.,
LTD) 30-06-1986 (Kat. A)

(73) Patentinhaber: Siemens Aktiengesellschaft,
Wittelsbacherplatz 2, D-8000 München 2(DE)

(72) Erfinder: Radtke, Wolfgang, Nachtigallenweg 46,
D-5063 Steinenbrück(DE)

ACTORUM AG

**Beschreibung**

Die Erfindung bezieht sich auf eine Anordnung zur Kühlung von Fahrzeugteilen in Kraftfahrzeugen, inbesondere Personenkraftwagen, die einer Sonneneinstrahlung ausgesetzt sind, bei welcher die Fahrgastraumluft zur Wärmeabführung vorgesehen ist. Eine derartige Anordnung ist bekannt aus der deutschen Offenlegungsschrift DE-A 2 6 03 297.

Bei dieser bekannten Anordnung werden aufgeheizte Fahrzeugteile, beispielsweise der Tankraum, durch die Fahrgastraumluft gekühlt. Zu diesem Zweck wird die verbrauchte Fahrgastraumluft nach ihrem Austritt aus dem Fahrgastraum, jedoch vor Abführung in die Fahrzeugumströmung, zur Kühlung an den aufgeheizten Fahrzeugteilen entlanggeführt. Es werden somit Fahrzeugteile außerhalb des Fahrgastraumes gekühlt, nachdem die Luft den Fahrgastraum verlassen hat.

In einer weiteren bekannten Ausführungsform einer Anordnung zum Kühlen von Fahrzeugteilen dient ebenfalls die Fahrgastraumluft zur Wärmeabführung. Die aufgeheizten Fahrzeugteile sind mit Luftführungskanälen überdeckt, die aus Formteilen bestehen. Diese Formteile aus wärmeisolierendem Material sind im wesentlichen als Platten gestaltet, die auf einer ihrer Flachseiten mit parallel nebeneinanderliegenden Nuten versehen sind, die jeweils einen Strömungskanal für die Fahrgastraumluft bilden. Durch Abstütz- oder Tragstege sind die Luftkanäle voneinander getrennt. Dieses Formteil kann mit den Stegen derart auf den Fahrzeugboden aufgesetzt werden, daß die geschlossene Flachseite dem Fahrzeuginneren zugewandt ist. Mit dieser Anordnung werden somit ebenfalls Fahrzeugteile gekühlt, die sich außerhalb des Fahrgastraumes befinden (DE-A 2 720 714).

Bei aerodynamisch optimierten Fahrzeugen werden bekanntlich die Front- und Heckscheiben verhältnismäßig flach angeordnet und gegebenenfalls auch vergrößert, so daß eine entsprechend große Wärmeenergie durch die Sonneneinstrahlung in den Fahrzeuginnenraum übertragen wird. Das ruhende Fahrzeug erreicht unter mitteleuropäischem Klima Temperaturen von etwa 50°C. Auch im fahrenden Fahrzeug kann ohne Klimaanlagen diese Sonnenwärmebelastung nur mit großen Luftmengen und entsprechend unzuträglichen Luftwechseln aus dem Fahrzeug abgeführt werden. Häufig werden die Seitenscheiben oder das Schiebedach geöffnet, so daß der Luftwiderstand wieder ansteigt. Mit den schräggestellten Scheiben sind entsprechend größere Armaturenbretter und Hutablageflächen verbunden. Damit sich diese Flächen in der Front- bzw. Heckscheibe nicht spiegeln, erhalten sie dunkle, vorzugsweise wenigstens annähernd schwarze Oberflächen, welche nahezu die gesamte eingestrahlte Sonnenenergie absorbieren und an den Fahrzeuginnenraum wieder abgeben.

Der Erfindung liegt nun die Aufgabe zugrunde, die Heizungs- und Lüftungsanlagen in Kraftfahrzeugen zu verbessern, insbesondere soll die Erwärmung des Innenraumes durch eingestrahlte Sonnenenergie begrenzt werden.

Diese Aufgabe wird erfindungsgemäß gelöst mit den kennzeichnenden Merkmalen des Anspruchs I. Durch den Kollektor wird wenigstens ein wesentlicher Teil des eingestrahlten Sonnenenergie mit der abströmenden Fahrgastraumluft nach außen abgeführt, bevor sie vom Absorber in den Fahrastraum übertragen werden kann. Durch die Luftströmung erhält man eine um etwa 40°C geringere Erwärmung der durch die Sonnenkollektoren abgedeckten Fahrzeugteile und eine entsprechende Begrenzung der Temperatur des Fahrgastraumes.

In einer besonderen Ausführungsform des Kollektors kann die dem Absorber zugewandte Oberfläche der Abdeckung mit einer zwar für Licht durchlässigen, jedoch Wärmestrahlen reflektierenden Oberflächenschicht versehen sein, so daß von der Abdeckung nur ein geringer Teil der Sonnenstrahlung absorbiert wird, während die vom Absorber ausgehende Wärmestrahlung die Abdeckung nur wenig erwärmt. Besonders vorteilhaft ist eine lediglich formschlüssige Verbindung zwischen der Abdeckung und dem Absorber, damit die Abdeckung, beispielsweise zwecks Reinigung, ohne größeren Zeitaufwand vom Absorber abgenommen werden kann. Zur Verbesserung der Wärmeübertragung vom Absorber zur als Kühlmedium dienenden Fahrgastraumluft kann die dem Strömungskanal zugewandte Absorberfläche vorzugsweise mit Rippen versehen sein. Solche Rippen können vorzugsweise zugleich eine Abstützung für die Abdeckung bilden.

Für die Hutablage einer Kombi-Limousine kann der Kollektor vorzugsweise so gestaltet sein, daß der Absorber und die Abdeckung mit der Heckklappe schwenkbar sind.

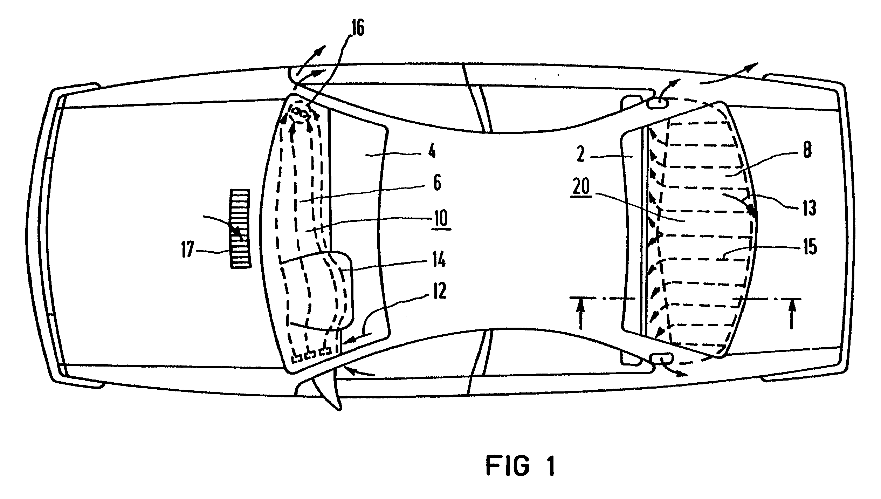

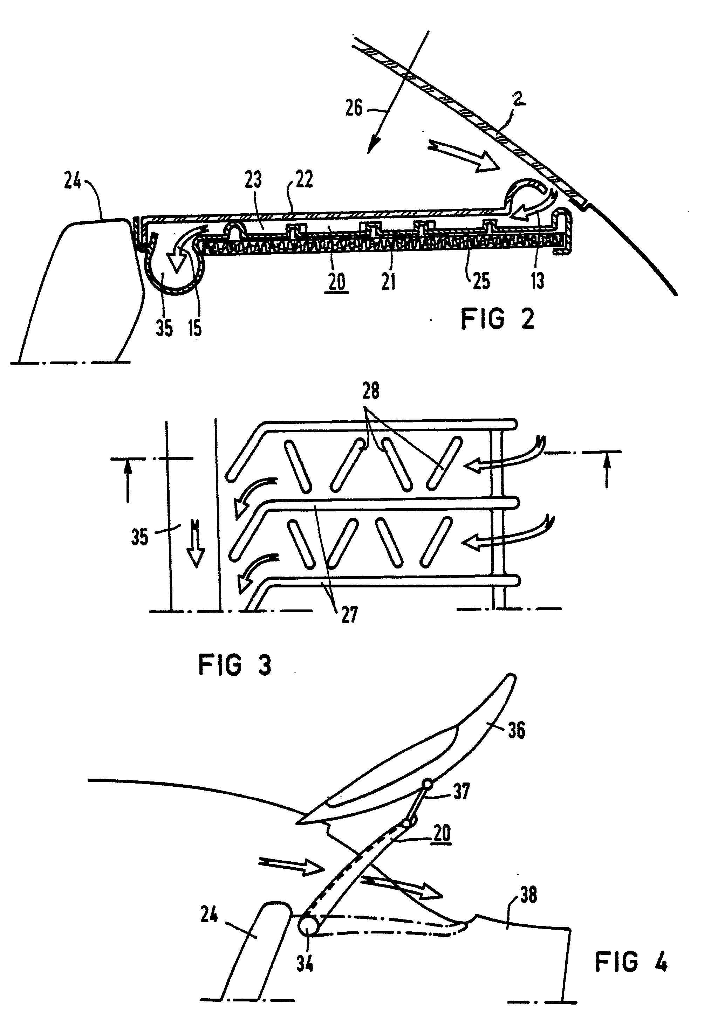

Zur weiteren Erläuterung der Erfindung wird auf die Zeichnung Bezug genommen, in der zwei Ausführungsbeispiele von Anordnungen zur Kühlung von Fahrzeugteilen schematisch veranschaulicht sind. In Figur 1 is sowohl eine Anordung zur Kühlung eines Armaturenbrettes als auch einer Hutablage als Draufsicht dargestellet. Figur 2 zeigt die Ausführungsform der Anordung zur Kühlung der Hutablage nach Figur 1 als Querschnitt. In Figur 3 sind Einzelheiten der Anordnung gemäß Figur 2 als Draufsicht veranschaulicht. In Figur 4 ist eine Ausführungsform der Anordnung zur Kühlung der Hutablage bei einer Kombi-Limousine mit hochklappbarem Absorber als Schnitt dargestellt.

In der Ausführungsform einer Anordnung zur Kühlung von Fahrzeugteilen gemäß Figur 1 is die Karosserie eines Personenkraftwagens aus strömungstechnischen Gründen mit einer flachen Heckscheibe 2 sowie einer ebenfalls verhältnismäßig flachen Frontscheibe 4 versehen, die eine entsprechend intensive Sonneneinstrahlung auf ein Armaturenbrett 6 bzw. eine Hutablage 8 ermöglichen. Sie sind deshalb jeweils mit einem Kollektor 10 bzw. 20 versehen. Ihre Kollektorflächen sind aufgrund der schrägen Anordnung der Front- bzw. Heckscheibe im Fahrzeug sehr stark der Sonneneinstrahlung ausgesetzt. Die Strömungsrichtung der abgesaugten Fahrgastraumluft ist durch Richtungspfeile 12 bzw, 13 angedeutet. Durch weitere Richtungspfeile 14 und 15 ist die Strömungsrichtung der Fahrgastraumluft zwischen der lichtdurchlässigen Abdeckung und dem zugeordneten Absorber angedeutet. Diese Strömungsrichtungen 14 und 15 sind von der räumlichen Anordnung der Ansaugpunkte und dem zur Verfügung stehenden Raum für den Abzug der Fahrgastraumluft abhängig. Zum Abzug der Fahrgastraumluft kann beispielsweise jeweils ein zusätzliches Gebläse vorgesehen sein, wie es für das Armaturenbrett in der Figur angedeutet und mit 16 bezeichnet ist.

In der Ausführungsform der Anordnung zur Kühlung gemäß Figur 1 ist die Absaugung der Fahrgastraumluft jeweils an den Seitenflächen des Fahrzeuges vorgesehen. Die Absaugung kann aber auch unterhalb des Armaturenbrettes 6 bzw. der Hutablage 8 erfolgen. Ferner kann die Fahrgastraumluft jeweils etwa an der Mitte der Frontscheibe 4 oder der Heckscheibe 2 zugeführt und nach Durchströmen des Kollekters an den beiden Seitenflächen des Fahrzeuges abgesaugt werden. Es kann aber auch der Überdruck im Fahrzeuginneren gegenüber der Außenhaut infolge eines üblicherweise eingebauten Heizungsgebläses oder auch infolge des Staudruckes zur Abführung der Fahrgastraumluft verwendet werden, wie es für die hintere Hutablage in Figur 1 dargestellt ist.

In der Ausführungsform gemäß Figur 2, die einen Schnitt durch einen Kollektor der Hutablage 8 gemäß Figur 1 darstellt, ist dieser Kollektor 20 zwischen der schrägen Heckscheibe 4 und einem Rücksitz 24 etwa waagrecht angeordnet. Zwischen einem Absorber 21 und der ihm zugeordneten Abdeckung 22 wird ein Strömungskanal 23 für die Fahrgastraumluft gebildet, deren Strömung durch die Pfeile 13 and 15 angedeutet ist. Die Abdeckung 22 besteht aus einem Material, das wenigstens annähernd im gleichen Wellenlängenbereich wie das Material der Heckscheibe 2 für die Sonneneinstrahlung 26, deren Richtung durch einen Richtungspfeil angedeutet ist, durchlässig, jedoch für die vom Absorber 21 ausgehende Wärmestrahlung undurchlässig ist. Zur Verminderung der Absorption kann die dem Absorber 21 zugewandte Oberfläche der Abdeckung 22 ferner noch mit einer Infrarotstrahlung reflektierenden Oberflächenvergütung versehen sein.

In einer weiteren vorteilhaften Ausführungsform kann die Abdeckung 22 mehrlagig ausgeführt sein oder aus strahlungsdurchlässigem Schaum bestehen, um die zum Innenraum weisende Oberfläche gegen die sich stark aufheizende Absorberfläche zu isolieren. Unterhalb des Absorbers 21 kann vorteilhaft noch eine Wärmedämmung 25 vorgesehen sein.

Die Abdeckung 22 kann im Bereich ihrer der Heckscheibe 4 zugewandten Kante zweckmäßig derart gebogen sein, daß eine strömungstechnisch günstige Luftzuführung für den Strömungskanal 23 gebildet wird. Das der Heckscheibe 2 zugewandte Ende kann beispielsweise mit in der Figur nicht dargestellten Abstandshaltern versehen sein, die auch im Falle einer geringen Verformung der Abdeckung einen vorbestimmten Abstand zur Heckscheibe 2 und zum Absorber 21 sicherstellen. Die dem Rücksitz 24 zugewandte Kante der Abdeckung 22 kann vorzugsweise derart zu einem Winkel abgebogen sein, daß sie in eine als U-förmige Rinne gestaltete Oberkante eines Abluftkanals 35 eingesetzt werden kann. Die Abdeckung 22 wird dann vorzugsweise ohne besondere lösbare Verbindungen auf den Absorber 21 aufgelegt und durch ihre in die Rinne eingreifende Kante in ihrer Lage fixiert. In dieser Ausführungsform kann die Abdeckung ohne besonderen Kraftaufwand vom Absorber 21 abgenommen werden.

Die besonnte Fläche kann mit einem separaten Gebläse versehen sein, das vorzugsweise temperaturabhängig oder auch lichtabhängig gesteuert werden kann. Die dunkle wärmeabsorbierende Oberfläche des Absorbers 21 kann gemäß einer besonders vorteilhaften Ausführungsform mit Solarzellen besetzt werden, die bei Sonneneinstrahlung den Strom für das Gebläse 16 sowie gegebenenfalls für eine bekannte Lüftungsanlage im Motorraum, deren Ansauggitter 17 in Figur 1 angedeutet ist, liefern.

Der Absorber 21 kann gemäß Figur 3 vorteilhaft mit Stützrippen 27 versehen werden, auf denen die Abdeckung 22 aufliegt. Ferner können zwischen den Stützripppen 27 Umlenkrippen 28 zur Umlenkung der Luftströmung vorgesehen sein, die eine entsprechende Verbesserung des Wärmeüberganges zwischen dem Absorber 21 und der strömenden Fahrgastraumluft bewirken. Die Stützrippen 27 können vorzugsweise zugleich zur Strömungsführung herangezogen werden und zu diesem Zweck an ihren dem Abluftkanal 35 zugewandten Ende entsprechend gebogen sein.

In der Ausführungsform einer Anordnung zur Kühlung für eine Kombi-Limousine gemäß Figur 4 ist der Sonnenkollektor 20 an seinem dem Rücksitz 24 zugewandten Ende als Drehlager 34 ausgebildet und an seinem einer Heckklappe 36 zugewandten Ende mit einer Hebelverbindung 37 versehen, so daß mit dem Öffnen des Kofferraumes 38 auch der Sonnenkollektor 20 hochgeklappt werden kann.

In Kombi-Limousinen kann ferner eine schwenkbare, wärmeabsorbierende Fläche vorgesehen sein, die im Bereich des unteren Heckscheibenrandes Luft aus dem Innenraum ansaugt und die dieser Ansaugstelle gegenüberliegend mit einem Luftkanal versehen ist. Dieser Luftkanal kann ein- oder beidseitig im Bereich des Drehlagers 34 in einer runden Dichtung münden, so daß eine luftdichte Verbindung gegeben ist, die jedoch ein Hochschwenken des Kollektors 20 ermöglicht.

Die lichtdurchlässige Abdeckung 22 kann bei Kombi-Limousinen außerdem aus einer rollbaren Folie bestehen, die den Kofferraum abdeckt. Die dunkle wärmeabsorbierende Fläche des Absorbers 21 kann eng darunter als weitere Folie ausegebildet sein, oder durch den Kofferraum selbst gebildet werden, der dann insgesamt durchlüftet ist.

Eine wärmedämmende Unterlage für den Kollektor 10 am Armaturenbrett kann vorzugsweise zugleich die Bedingungen des Aufprallschutzes erfüllen. Der Zwischenraum zwischen der Abdeckung und dem Absorber kann zur Verbesserung des optischen Erscheinungsbildes und zur Polsterung der Aufprallfläche aus porösem dunklem Material bestehen. Durch die Poren wird Luft hindurchgeleitet und anschließend nach außen abgeleitet. Die Luft kann vorzugsweise aus dem Innenraum entnommen werden, jedoch auch von außen durch den Zwischenraum gefördert werden.

Im Ausführungsbeispiel ist jeweils ein Sonnenkollektor 10 bzw. 20 für das Armaturenbrett und die Hutablage vorgesehen. Unter Umständen kann es zweckmäßig sein, noch weitere Fahrzeugteile, beispielsweise die der Sonneneinstrahlung ausgesetzten oberen Bereiche der Türverkleidungen, jeweils mit einem Sonnenkollektor zu versehen.

## Patentansprüche

1. Anordnung zur Kühlung von Fahrzeugteilen in Kraftfahrzeugen, insbesondere Personenkraftwagen, die einer Sonneneinstrahlung ausgesetzt sind, bei welcher die Fahgastraumluft zue Wärmeabführung vorgesehen ist, **dadurch gekennzeichnet,**daß der Sonneneinstrahlung (26) ausgesetzte Teile des Fahrgastraumes jeweils mit einem Sonnenkollektor (10, 20) versehen sind, der einen Absorber (21) enthält,. der zusammen mit einer für Sonnenstrahlung transparenten und für Infrarotstrahlung undurchlässigen Abdeckung (22) einen Strömungskanal (23) für die abströmende Fahrgastraumluft bildet.

2. Anordnung nach Anspruch 1, **dadurch gekennzeichnet,** daß die dem Absorber (21) zugewandte Oberfläche der Abdeckung (22) mit einer Infrarostrahlung reflektierenden Oberflächenvergütung versehen ist.

3. Anordnung nach Anspruch 1, **dadurch gekennzeichnet,** daß die Abdeckung (22) mit dem Absorber (21) nur formschlüssig verbunden ist.

4. Anordnung nach Anspruch 1, **dadurch gekennzeichnet,** daß die dem Strömungskanal (23) zugewandte Oberfläche des Absorbers (21) mit Stützrippen (27) und Umlenkrippen (28) versehen ist.

5. Anordnung nach Anspruch 4, **dadurch gekennzeichnet,** daß die Umlenkrippen (28) zugleich als Stützrippen vorgesehen sind.

6. Anordnung nach Anspruch 1, **dadurch gekennzeichnet,** daß den Sonnenkollektoren (10, 20) jeweils ein Gebläse (16) zugeordnet ist.

7. Anordnung nach Anspruch 1, **dadurch gekennzeichnet,** daß die der Sonneneinstrahlung (26) zugewandte Oberfläche des Absorbers (21) mit Solarzellen versehen ist.

8. Anordnung nach Anspruch I für die Kühlung einer Hutablage einer Kombilimousine, **dadurch gekennzeichnet,** daß der Sonnenkollektor (20) mit der Heckklappe (36) gekoppelt schwenkbar angeordnet ist.

9. Anordnung nach Anspruch 1, **dadurch gekennzeichnet,** daß die Abdeckung (22) und der Absorber (21) voneinander getrennt angeordnet sind, wobei der Raum zwischen Abdeckung (22) und Absorber (21) als Kofferraum vorgesehen ist.

## Revendications

1. Dispositif de refroidissement de parties de véhicule automobile, notamment de voitures de tourisme, exposées à un rayonnement solaire, en utilisant l'air de l'habitacle pour évacuer la chaleur, caractérisé en ce que les parties de l'habitacle exposées au rayonnement solaire (26) sont munies, chacune, d'un collecteur solaire (10, 20) qui comporte un absorbeur (21), lequel forme, avec un couvercle (22) transparent au rayonnement solaire et imperméable au rayonnement infrarouge, un canal d'écoulement (23) pour l'air qui sort de l'habitacle.

2. Dispositif suivant la revendication 1, caractérisé en ce que la surface du couvercle (22), qui est tournée vers l'absorbeur (21), est munie d'un revêtement anti-reflet réfléchissant le rayonnement infrarouge.

3. Dispositif suivant la revendication 1, caractérisé en ce que le couvercle (22) n'est relié à l'absorbeur (21) que par complémentarité de formes.

4. Dispositif suivant la revendication 1, caractérisé en ce que la surface de l'absorbeur (21), tournée vers le canal d'écoulement (23), est munie de nervures d'appui (27) et de nervures de déviation (28).

5. Dispositif suivant la revendication 4, caractérisé en ce que les nervures de déviation (28) sont prévues en même temps comme nervures d'appui.

6. Dispositif suivant la revendication 1, caractérisé en ce qu'aux collecteurs solaires (10, 20) sont associées respectivement des ventilateurs (16).

7. Dispositif suivant la revendication 1, caractérisé en ce que la surface de l'absorbeur (21), qui est tournée vers le rayonnement solaire (26), est munie de cellules solaires.

8. Dispositif suivant la revendication 1, pour le refroidissement d'une plage arrière d'une berline break, caractérisé en ce que le collecteur solaire (20) est monté basculant en étant accouplé au hayon (36).

9. Dispositif suivant la revendication 1, caractérisé en ce que le couvercle (22) et l'absorbeur (21) sont disposés de manière séparée l'un de l'autre, l'espace compris entre le couvercle (22) et l'absorbeur (21) étant prévu comme coffre.

## Claims

1. Arrangement for the cooling of parts of a vehicle in motor vehicles, in particular passenger cars, which are exposed to solar irradiation, in which the air in the passenger compartment is provided for the elimination of heat, characterised in that each part of the passenger compartment exposed to the solar irradiation (26) is provided with a solar collector (10, 20) which comprises an absorber (21) which, together with a cover (22) transparent to solar irradiation and impermeable to infrared radiation, forms a flow channel (23) for the air flowing away from the passenger compartment.

2. Arrangement according to claim 1, characterised in that the surface of the cover (22) facing the absorber (21) is provided with a surface coating which reflects infrared radiation.

3. Arrangement according to claim 1, characterised in that the cover (22) is connected to the absorber (21) in form-locking manner only.

4. Arrangement according to claim 1, characterised in that the surface of the absorber (21) facing the flow channel (23) is provided with supporting ribs (27) and deflection ribs (28).

5. Arrangement according to claim 4, characterised in that the defleciton ribs (28) are at the same time provided as supporting ribs.

6. Arrangmeent according to claim 1, characterised in that a blower (16) is assigned to each solar collector (10, 20).

7. Arrangement according to claim 1, characterised in that the surface of the absorber (21) facing the solar irradiation (26) is provided with solar cells.

8. Arrangmeent according to claim 1 for the cooling of a hat rack of a combination saloon, characterised in that the solar collector (20) is arranged so that it is pivotably coupled to the hatchback door (36).

9. Arrangement according to claim 1, characterised in that the cover (22) and the absorber (21) are arranged so that they are separated from each other, the space between the cover (22) and the absorber (21) being provided as a luggage space.

FIG 1

FIG 2

FIG 3

FIG 4